# FASCICULE DE BREVET EUROPEEN

(11) **EP 2 729 412 B1**
(45) Date de publication et mention de la délivrance du brevet: **15.11.2017**
(21) Numéro de dépôt: 12744043.6
(22) Date de dépôt: 03.07.2012
(51) Int. Cl.: C01B 32/956

(54) **PROCEDE DE FABRICATION DE CARBURE DE SILICIUM**
VERFAHREN ZUR HERSTELLUNG VON SILICIUMCARBID
PROCESS FOR THE PREPARATION OF SILICON CARBIDE

(30) Priorité: 06.07.2011 FR 1156096
(43) Date de publication de la demande: 14.05.2014
(73) Titulaire: Saint-Gobain Ceramic Materials AS, 4792 Lillesand (NO)
(72) Inventeur: ALEONARD, Bruno, F-75003 Paris (FR); DI PIERRO, Simonpietro, F-75019 Paris (FR); SCHWARTZ, Matthieu, F-75012 Paris (FR)
(74) Mandataire: Saint-Gobain Recherche
(86) Numéro de dépôt international: PCT/FR2012/051548
(87) Numéro de publication internationale: WO 2013/004967

(56) Documents cités:
- DE-A1-102008 042 499
- US-A- 3 976 829
- US-A- 4 702 900
- US-A- 4 839 150

## Description

L'invention concerne un nouveau procédé de fabrication de carbure de silicium.

Le carbure de silicium est un matériau extrêmement rare à l'état naturel en raison des conditions particulières nécessaires à sa synthèse (très haute température, atmosphère très réductrice). Ce matériau présente cependant de très nombreux avantages, principalement en raison de sa dureté très élevée et de ses propriétés réfractaires. Il est notamment utilisé comme abrasif ou encore dans la construction de fours, mais aussi plus récemment comme semi-conducteur à large bande. Selon une autre application plus récente, il est également utilisé comme matériau poreux pour la fabrication de filtres à particules. Toutes ces applications expliquent que la demande pour ce matériau soit très importante et croissante à l'heure actuelle.

De façon connue, on peut synthétiser le carbure de silicium par action à chaud du silicium sur un précurseur carboné ou par réduction d'un précurseur de silicium par un précurseur carboné.

Plus précisément, selon ce deuxième mode, le carbure de silicium est essentiellement produit à partir d'une source carbonée et d'une source de silice.

Le procédé de fabrication le plus courant est le procédé Acheson, qui consiste à chauffer électriquement une résistance au coeur d'un mélange des deux matières premières pour donner lieu à la réaction simplifiée :

SiO₂ + 3C = SiC + 2CO (1),

à une température supérieure à 1500°C, et même très supérieure à 2000°C au coeur de la zone de réaction.

De façon connue, une grande quantité de gaz est émise, en général à l'air libre, que ce soit durant la phase où le four est chauffé, durant la phase de synthèse du carbure de silicium ou encore durant le refroidissement.

La source de silice est en général du sable de pureté supérieure à 95% en SiO₂ (préférentiellement supérieure à 99% en SiO₂). La source de carbone est en général et préférentiellement du coke de pétrole (résidu de la distillation du pétrole). Ce coke de pétrole est pauvre en cendres minérales (moins de 1% en général, mesurées selon ISO 1171). Il contient également du soufre (de 0,2 à 5% en général selon ISO 19579) et des espèces volatiles (fréquemment autour de 10%, selon ISO 562).

Dans la présente description, sauf précision contraire, tous les pourcentages sont donnés en poids, sur la base de matière séchée.

Dans de tels cokes de pétrole, la teneur élémentaire massique en hydrogène, aussi appelé TEMH dans la description est typiquement de l'ordre de 4%. La valeur de TEMH selon l'invention est mesurée selon la norme ISO TS 12902.

L'utilisation d'un tel coke lors de la fabrication du SiC peut conduire à un impact indésirable en termes d'hygiène, de sécurité ou d'environnement (HSE), par production d'espèces gazeuses nocives tel que H₂, CH₄, H₂S, SO2, les mercaptans, les composés aminés, les organiques aromatiques.

Des espèces condensables du type goudrons ou HAP (hydrocarbures aromatiques polycycliques), également indésirables du point de vue HSE peuvent également être dégagées en grandes quantités, en fonction de la source de carbone. Il est à noter que les sources pures en carbone (>99% en C) sont beaucoup plus chères et incompatibles avec une production de masse.

Pour résoudre le problème de dégagement des gaz lors du procédé Acheson, le brevet US 3,976,829 décrit un procédé de fabrication du SiC comprenant des moyens de collecte des gaz. Plus précisément, il est proposé dans cette publication d'apposer des moyens supplémentaires de couverture au dessus du mélange réactionnel disposé autour de la résistance électrique du four Acheson couplés à des moyens de collecte des produits gazeux émis lors de la synthèse du SiC. Les gaz collectés sont ensuite traités et/ou brûlés, de manière à éviter l'émission de gaz réduits nuisibles. Néanmoins, cette technique nécessite une manutention et un contrôle de procédé délicats. Notamment, les gaz du procédé étant toxiques et/ou explosifs, avec typiquement un mélange gazeux comprenant de l'ordre de 50% volumique de CO et de 30% volumique de H₂. Un tel mélange entraîne et nécessite un contrôle très fin et difficile des gaz présents sous la couverture. Un tel réglage est rendu d'autant plus difficile que le procédé Acheson est de façon connue sujet à quelques éruptions gazeuses dues à des surpressions locales. Lors de tels phénomènes, la couverture disposée au dessus du four peut rapidement perdre son utilité et pire à l'extrême générer des explosions importantes en raison du stockage d'un volume de gaz explosif potentiellement incontrôlé au-dessus du four. En outre, les fortes émissions des espèces condensables (HAP) lors du procédé Acheson entraînent l'encrassement rapide des conduites et autres moyens utilisés pour la collecte et l'évacuation des gaz, ce qui rend coûteux et complexe la gestion d'une telle installation.

La présente invention a pour but, selon un premier aspect, de proposer un procédé alternatif de fabrication du SiC à partir d'un coke chargé en composés hydrogénés (c'est-à-dire un pourcentage poids d'hydrogène contenu d'au moins 2%, voire d'au moins 3% au départ), tout particulièrement un coke de pétrole, de charbon ou issu de la biomasse, permettant de limiter les dégagements des espèces nocives lors des phases de montée en température du four, de synthèse du SiC et de refroidissement du four.

Sans sortir du cadre de l'invention, d'autres sources de carbone telles que des cokes issus de la biomasse ou de charbon peuvent également être utilisées.

Plus précisément par application du présent procédé, il est possible d'obtenir de nombreux avantages lors du processus de production de SiC :
- baisse des émissions de gaz (hors CO, qui est intrinsèque à la réaction (1)) et des espèces condensables (HAP) et de leurs effets indésirables (risques de toxicité, odeurs, surpressions), notamment dans le cas d'émissions à l'air libre,
- notamment, baisse des émissions de gaz soufrés pour la fraction de soufre faiblement liée, et baisse des émissions de composés aminés,
- élimination des fines particules (sujettes aux envolements) par l'agglomération des particules carbonées.

Selon un autre aspect, le procédé objet de la présente invention permet en outre, dans ses conditions spécifiques de mise en oeuvre, une baisse de la consommation énergétique de la réaction globale de formation du SiC, en particulier de la consommation énergétique électrique du four, par rapport à un procédé de type Acheson mené dans des conditions habituelles.

Plus précisément, la présente invention se rapporte à un procédé de fabrication du SiC, dans lequel les émissions de polluants sont minimisées, comprenant la réduction de la silice par du carbone, ledit procédé consistant à chauffer électriquement une résistance au coeur d'un mélange de matières premières consistant en a) une source carbonée choisie parmi les cokes notamment de pétrole et b) une source de silicium, notamment une silice de pureté supérieur à 95% en SiO₂, pour donner lieu à une température supérieure à 1500°C à la réaction simplifiée :

SiO₂ + 3C = SiC + 2CO (1).

Ledit procédé se caractérise en ce que ladite source carbonée subit préalablement un traitement d'élimination de l'hydrogène contenu, de telle façon que sa teneur élémentaire en hydrogène (TEMH) soit inférieure à 2% poids.
Le procédé selon l'invention comprend notamment les étapes suivantes :
- mélange de matières premières consistant en une source carbonée choisie parmi les cokes dont la teneur élémentaire en hydrogène (TEMH) est supérieure à 2% poids, voire supérieure à 3%, et une silice de pureté supérieure à 95% en SiO₂,
- ladite source carbonée subissant, avant son mélange avec la silice, un traitement d'élimination de l'hydrogène contenu, de telle façon que sa teneur élémentaire en hydrogène (TEMH) soit inférieure à 2% poids.
- chauffage électrique dudit mélange de matières premières par une résistance disposée au coeur de celui-ci, jusqu'à une température supérieure à 1500°C pour donner lieu à la réduction de l'oxyde de silicium par le carbone, à une température supérieure à 1500°C, selon la réaction simplifiée :

   SiO₂ + 3C = SiC + 2CO (1),

Par minimisation des émissions de polluants, on entend notamment, au sens de la présente invention :
- une teneur volumique en H₂ du gaz émis par le four (en moyenne lors de la phase de formation du SiC, avant toute dilution, notamment atmosphérique et avant tout traitement ultérieur) inférieure à 10 vol%, préférentiellement inférieure à 5% voire à 1%,
- une teneur volumique en CH₄ du gaz émis par le four (en moyenne lors de la phase de formation du SiC, avant toute dilution, notamment atmosphérique et avant tout traitement ultérieur) inférieure à 1 vol%, préférentiellement inférieure à 0,5% voire à 0,1%,
- une teneur volumique en H₂S du gaz émis par le four (en moyenne lors de la phase de formation du SiC, avant toute dilution, notamment atmosphérique et avant tout traitement ultérieur) inférieure à 1000 ppm vol, préférentiellement inférieure à 500 ppm vol,
- une teneur volumique en SO₂ du gaz émis par le four (en moyenne lors de la phase de formation du SiC, avant toute dilution, notamment atmosphérique et avant tout traitement ultérieur) inférieure à 500 ppm vol, préférentiellement inférieure à 200 ppm vol,
- une teneur volumique en COS du gaz émis par le four (en moyenne lors de la phase de formation du SiC, avant toute dilution, notamment atmosphérique et avant tout traitement ultérieur) inférieure à 1000 ppm vol, préférentiellement inférieure à 500 ppm vol, voire 100 ppm vol,
- une teneur en HAP inférieure à 500 ng par m³ de gaz émis par le four, voire inférieure à 100 ng par m³ ou même inférieure à 50 ng par m³.

De préférence, le coke après déshydrogénation présente une teneur inférieure à 10 ng/mg, voire même inférieure 1 ng/mg ou encore inférieure à 0,5 ng/mg pour chacun des composés HAP suivants : Naphtalène, Acénaphtène, Fluorène, Phénanthracène, Chrysène, Anthracène, Pyrène, Benz[a]anthracene, Benzo[a]pyrene, Dibenzo(a,h)Anthracene, Benzo[ghi] perylene, Benzo[k] fluoranthene, Fluoranthène, Benzo[b] fluoranthene et In(1,2,3,c,d,)P).

Il a été trouvé par la société déposante que l'apport énergétique global nécessaire à la fabrication de SiC, incluant une étape de prétraitement du coke, pouvait être sensiblement diminué par rapport au procédé Acheson conventionnel dans lequel le coke de pétrole est directement mis au contact de la silice. En particulier, les bilans énergétiques effectués montrent que le rendement énergétique du four Acheson dans un procédé selon l'invention est selon toute attente sensiblement amélioré.

En particulier, la mise en place d'atmosphères légèrement oxydantes dans le four de prétraitement, c'est-à-dire dont la teneur en oxygène est contrôlée, diminue encore l'apport énergétique global par la combustion (exothermique) des volatiles dans le four.

Tout particulièrement, la consommation électrique globale nécessaire pour la fabrication de SiC peut avantageusement être sensiblement réduite si le prétraitement du coke est réalisé par combustion. Un tel mode de réalisation améliore le bilan des émissions de gaz à effet de serre dans le cas d'une électricité à source primaire fossile.

Enfin, les émissions de gaz à effet de serre sont également largement diminuées du fait de la transformation de gaz à fort effet de serre émis dans le procédé traditionnel (comme le méthane) en CO2 lors de la combustion de prétraitement.

De préférence, la teneur élémentaire en hydrogène résiduelle du coke de pétrole est inférieure à 1% et de manière très préférée inférieure à 0,5%, voire inférieure à 0,1%.

En particulier, les meilleurs bilans énergétiques du procédé global de fabrication du SiC ont été trouvés lorsque la TEMH du coke traité était comprise entre 0,01 et 0,1%, notamment entre 0,01 et 0,05%. En particulier, la dépense énergétique supplémentaire nécessaire à l'obtention d'un TEMH inférieur à 0,01 conduisait à un bilan énergétique global alors dégradé, en raison de l'énergie dépensée lors de l'étape préliminaire de déshydrogénation du coke de pétrole, sans pour autant que les rejets de matières polluantes en soient sensiblement diminués.

Selon l'invention, le traitement d'élimination de l'hydrogène de la source de carbone est effectué avant son mélange avec la source de silicium. Ainsi, les études menées par la société déposante ont montré que contre toute attente le bilan énergétique est globalement amélioré.

Dans un mode préféré de l'invention le traitement d'élimination de l'hydrogène est choisi et ses conditions fixées de telle façon que moins de 5% massique, de préférence moins de 1% massique du carbone fixe du coke (sur le produit sec) est conjointement éliminé (NF M 03-006).

Tout particulièrement et à cette fin, le traitement est de préférence effectué dans une atmosphère peu oxydante. En particulier :
- Selon un premier mode possible, le traitement d'élimination de l'hydrogène peut être par exemple un traitement thermique contrôlé du coke dans un four électrique, sous atmosphère inerte, par exemple d'argon ou d'azote.
- Selon un autre mode préféré, le traitement d'élimination de l'hydrogène est un traitement thermique dans un four à flamme, notamment rotatif, entre 1000 et 1350°C, de préférence entre 1250 et 1350°C. Durant ce traitement, la pression partielle en oxygène de l'atmosphère de calcination est avantageusement inférieure à 5% de la pression totale des gaz, de préférence inférieure à 1% de la pression totale des gaz. Selon une réalisation possible de ce mode permettant de minimiser l'énergie mise en oeuvre au cours du traitement d'élimination, les gaz issus de l'étape d'élimination de l'hydrogène sont utilisés au moins en partie comme carburant dudit four à flamme, comme déjà précédemment décrit.

Selon un autre aspect de mise en oeuvre de la présente invention, les dimensions de la résistance du four de synthèse du SiC, notamment sa section et/ou sa longueur, sont avantageusement configurées en fonction de la résistivité électrique de la source carbonée déshydrogénée, afin d'en optimiser l'efficacité.

Selon un mode avantageux de la présente invention, au dessus du mélange réactionnel disposé autour de la résistance électrique du four Acheson, des moyens supplémentaires de couverture sont mis en place, tels que par exemple ceux décrits dans le brevet US 3,976,829, ces moyens de couverture étant couplés à des moyens de collecte (et d'évacuation) des produits gazeux émis lors de la synthèse du SiC. Dans un tel cas, il devient alors plus facile de traiter les gaz polluants ainsi collectés. Un tel mode permet en particulier de résoudre les problèmes exposés précédemment en relation avec le système proposé dans le brevet US 3,976,829 : l'étape préliminaire de déshydrogénation selon l'invention se traduit par une diminution extrêmement significative des composés hydrogénés, organiques, soufrés ou condensables de type HAP dans les gaz issus de la réaction, comme il est décrit dans les exemples qui suivent. Une telle diminution permet de réduire efficacement les risques liés au gaz hydrogène, ainsi que les problèmes d'encrassement/de corrosion du dispositif de recouvrement et de collecte. Enfin le retraitement d'un gaz peu soufré constitué presque exclusivement de monoxyde de carbone est bien entendu très facilité par rapport à celui issu traditionnellement d'un four Acheson, dans lequel des gaz de nature et de propriétés très différentes peuvent être mélangés, dans des quantités très variables (voir en particulier le tableau 1 qui suit).

L'invention et ses avantages seront mieux compris à la lecture de la description détaillée qui suit. Bien entendu la présente invention ne se limite pas à un tel mode, sous aucun des aspects décrits par la suite.

Un mélange d'une source carbonée du type coke de pétrole / sable (dont le pourcentage de silice SiO₂ est supérieur à 95%) est réalisé dans les conditions standards pour l'homme de l'art. Les exemples qui suivent ont été réalisés en utilisant un coke de pétrole brésilien de la société Petrobras et issu de la distillation du pétrole dans lequel la TEMH est mesurée à 4%.

Le coke de pétrole est précalciné dans des conditions de température et pendant une durée suffisante pour permettre la réduction de sa teneur élémentaire massique en hydrogène (TEMH). Le TEMH est mesuré au sens de la présente invention selon la norme ISO TS 12902.

Cette étape de réduction de la teneur en hydrogène peut par exemple être obtenue par un traitement thermique contrôlé du coke dans un four électrique, sous atmosphère inerte.

En particulier, selon les essais menés en laboratoire dans de telles conditions, les traitements thermiques peuvent conduire sans dépense énergétique substantielle à une réduction du TEMH d'un facteur supérieur à 100. A titre d'exemple une TEMH finale d'environ 0,03% a été mesurée suite à un traitement thermique comportant un palier en température maximale de 1350°C inférieur à 30 minutes, et d'environ 0,06% suite à un traitement thermique à 1200°C pendant 2 heures du coke de pétrole fourni par la société Petrobras.

Selon un autre mode possible, les essais menés par la demanderesse ont montrés que des TEMH inférieurs à 0,1%, voire inférieurs à 0,05% peuvent être également obtenus pour des échantillons traités dans un four à flamme entre 1250 et 1350°C, de faibles pertes de carbone fixe étant parallèlement observées (de 1 à 5% sur le produit sec selon les conditions opératoires). Pour ce faire, la pression partielle en oxygène dans l'atmosphère de calcination doit être la plus basse possible, typiquement inférieure à 5% de la pression totale des gaz et de préférence inférieure à 1%, voire inférieure à 0,7% de la pression totale des gaz.

Tout particulièrement, il est préféré selon l'invention d'utiliser un four rotatif à flamme pour effectuer la calcination industrielle du coke, dans les conditions citées précédemment.

Les cycles de calcination susmentionnés incluent des temps de séjour du coke au palier de température maximale généralement inférieurs à 1 heure, en particulier de l'ordre de vingt minutes à une heure.

Le coke ainsi déshydrogéné, éventuellement débarrassé des particules les plus grossières (> 1 cm de diamètre) au préalable (par passage en broyeur à marteaux par exemple), est ensuite mélangé avec la source de silicium telle que précédemment décrite.

L'ensemble est introduit dans le réacteur de SiC, par exemple un four du type Acheson incorporant une résistance électrique de 1,6 mètres de long mais modifiée pour l'adapter au mélange selon la présente invention. En particulier, la résistivité du système est modifiée en conséquence, par l'ajustement des dimensions de la résistance centrale (c'est-à-dire diminution de la section et de la longueur).

Notamment, la société déposante a observé que l'étape d'élimination de l'hydrogène par l'étape supplémentaire décrite précédemment, vis-à-vis d'un procédé Acheson mené classiquement, entraîne une baisse significative de la résistivité de la source carbonée, notamment du coke.

En particulier, la résistivité du coke calciné étant très sensiblement diminuée par rapport à celle mesurée du coke brut, les essais menés dans le cadre de la présente invention ont montré que la résistance équivalente du four complet pouvait baisser d'un facteur pouvant aller jusqu'à deux dans les conditions des tests pratiqués. La géométrie de la résistance centrale chauffant le mélange réactionnel (en général du graphite) peut donc être adaptée pour l'adapter aux spécificités du transformateur électrique du four Acheson, en jouant par exemple sur sa section et/ou éventuellement sa longueur.

Le coke calciné peut reprendre de l'humidité atmosphérique selon ses conditions d'acheminement et de stockage entre le four de calcination et le four Acheson. Cette humidité n'introduit pas de changement notable sur les effets mentionnés ci-dessus ni sur les teneurs (données sur matières séchées) mentionnées.

Le procédé est autrement conduit de façon classique.

L'invention et ses avantages seront mieux compris à la lecture des exemples qui suivent.

### Exemples :

### Exemple 1 (comparatif) :

Dans un premier temps, on a tout d'abord procédé à la fabrication de carbure de silicium dans un four pilote, à partir d'un mélange du coke de pétrole de la société Petrobras précédemment décrit, de silice, dans les conditions classiques et bien connues du procédé Acheson. La silice présente une distribution granulométrique telle que 50% en masse des grains est inférieure à 600 microns. La granulométrie du coke de pétrole est inférieure à 10 mm. Le mélange est placé au contact d'une résistance électrique. La résistance électrique est dimensionnée de telle façon que la puissance délivrée soit de l'ordre de 300 kWatts. Le mélange est porté à une température supérieure à 1500°C dans la zone réactionnelle, pour l'obtention de la réaction (1) de fabrication de SiC. Tout au long du processus de fabrication du SiC, c'est-à-dire pendant la durée durant laquelle le courant électrique traverse la résistance, les gaz issus de la réaction sont collectés et analysés en ligne, afin d'en déterminer la composition et la teneur dans les différents polluants. Les résultats obtenus sont regroupés dans le tableau 1 qui suit.

### Exemple 2 (selon l'invention) :

Le protocole expérimental de l'exemple 1 est repris à l'identique mais une étape préalable de traitement (calcination) du coke de pétrole est mise en oeuvre dans un four rotatif à flamme, consistant en une étape de chauffe à une température de 1350°C, suivie d'une descente à l'ambiante, la pression partielle en oxygène dans l'atmosphère de calcination étant inférieure à 1% de la pression totale des gaz, de telle façon que la TEMH soit proche de 0,03%. Après broyage du coke déshydrogéné, le mélange est placé au contact d'une résistance dont la section est réduite pour compenser la diminution de la résistivité électrique du coke déshydrogéné (et donc du mélange), la puissance délivrée par ladite résistance étant maintenue à environ 300 kWatts, comme pour l'exemple précédent.

De même que précédemment, lors du processus de fabrication du SiC, les gaz issus de la réaction sont collectés et analysés en ligne, afin d'en déterminer la teneur dans les différents polluants. Les résultats obtenus sont également regroupés dans le tableau 1 qui suit.

**Tableau 1**

| | Exemple 1 | Exemple 2 |
|---|---|---|
| CO* (% volume) | 62 | 95 |
| H₂* (% volume) | 30 | 1 |
| CH₄* (% volume) | 4 | 0,3 |
| H₂S* (ppm vol.) | 2000 | 1000 |
| SO₂* (ppm vol.) | 1000 | 500 |
| NH₃* (ppm vol.) | 5000 | <500 |
| HAP** (ng/m³) | 2000 | <100 |

| | | |
|---|---|---|
| * valeur moyenne sur l'ensemble du cycle de génération du SiC, au point d'émission dans le four (avant dilution dans l'air) ** valeur moyenne sur l'ensemble du cycle de génération du SiC, à une hauteur d'1 mètre au dessus du four | | |

A la lecture du tableau 1, on voit que la quantité de polluants émise est sensiblement diminuée lorsque le procédé selon l'invention (exemple 2) est mis en oeuvre. On observe ainsi une diminution marquée des odeurs organiques et soufrées par rapport à la situation de référence du four Acheson, dans lequel le coke est utilisé sans déshydrogénation préalable.

Un tel phénomène est d'autant plus surprenant que la teneur en soufre du coke après déshydrogénation a été mesurée proche voire identique à celle du coke brut (avant déshydrogénation).

Une telle composition de gaz émise par le four Acheson, constituée essentiellement de CO et dans lequel la teneur en polluants, notamment soufrés ou condensables de type HAP est sensiblement diminuée, peut être facilement collectée sans danger d'explosion ou d'encrassement du circuit de récupération, notamment pour être traité, notamment par brulage.

En outre, les résultats de mesure par tamisage de la granulométrie des cokes hydrogénés et non hydrogénés, reportés dans le tableau 2 ci-dessous, indiquent que les fines de coke sont en grande partie éliminées par le traitement de calcination supplémentaire selon l'invention, soit par combustion ou par entraînement dans le four de calcination (ce qui n'est pas souhaitable et minoritaire dans notre essai) ou encore par agglomération. Une telle caractéristique de répartition granulométrique se traduit par un empoussièrement sensiblement diminué à proximité du four Acheson, notamment lors du montage et du démontage de celui-ci.

**Tableau 2**

| | Exemple 1 | Exemple 2 |
|---|---|---|
| d₁₀* | 100 µm | 250 µm |

| | | |
|---|---|---|
| * diamètre médian de grain pour lequel 10 %, en masse, des grains de la poudre de coke ont une taille inférieure ou égale. | | |

Enfin, en fonction de la source de coke utilisée et de sa valeur résiduelle en hydrogène, après l'étape d'élimination de l'hydrogène contenu selon l'invention, il a été mesuré par la société déposante que le rendement énergétique mesuré d'un four type Acheson modifié pour traiter un coke déshydrogéné selon l'invention peut être entre environ 10% et environ 25% plus élevé qu'un four Acheson classique, tel qu'utilisé pour le traitement d'un coke non déshydrogéné. Par rendement énergétique du four Acheson, on entend le rendement calculé sur la base des kWh dépensés pour la formation finale d'un kilo de SiC.

## Revendications

1. Procédé de fabrication de SiC, dans lequel les émissions de gaz polluants sont minimisées, comprenant la réduction d'oxyde de silicium par du carbone, en chauffant électriquement une résistance au coeur d'un mélange de matières premières consistant en une source carbonée choisie parmi les cokes notamment de pétrole et une source de silicium, notamment une silice de pureté supérieure à 95% en SiO₂, pour donner lieu, à une température supérieure à 1500°C, à la réaction simplifiée :
SiO₂ + 3C = SiC + 2CO (1),
ledit procédé **se caractérisant en ce que** ladite source carbonée subit préalablement un traitement d'élimination de l'hydrogène contenu, de telle façon que sa teneur élémentaire en hydrogène (TEMH) soit inférieure à 2% poids.

2. Procédé de fabrication de SiC selon la revendication 1, comprenant les étapes suivantes :
- mélange de matières premières consistant en :
o une silice de pureté supérieure à 95% en SiO₂,
o une source carbonée choisie parmi les cokes dont la teneur élémentaire initiale en hydrogène (TEMH) est supérieure à 2% poids, ladite source carbonée ayant subi, avant ledit mélange avec la silice, un traitement préalable d'élimination de l'hydrogène contenu, de telle façon que sa teneur élémentaire en hydrogène (TEMH) soit inférieure à 2% poids,
- chauffage électrique dudit mélange de matières premières par une résistance disposée au coeur de celui-ci, jusqu'à une température supérieure à 1500°C pour donner lieu à la réduction de l'oxyde de silicium par le carbone, à une température supérieure à 1500°C, selon la réaction simplifiée :
SiO₂ + 3C = SiC + 2CO (1).

3. Procédé selon l'une des revendications 1 ou 2, dans lequel la teneur élémentaire en hydrogène résiduelle du coke est inférieure à 1% poids et de préférence inférieure à 0,5% poids.

4. Procédé selon l'une des revendications précédentes, dans lequel la teneur élémentaire en hydrogène résiduelle du coke est comprise entre 0,1 et 0,01%, de préférence entre 0,05 et 0,01%.

5. Procédé selon l'une des revendications précédentes, dans lequel les dimensions de la résistance, notamment sa section et/ou sa longueur, sont configurées en fonction de la résistivité électrique de la source carbonée déshydrogénée.

6. Procédé selon l'une des revendications précédentes, dans lequel le traitement d'élimination de l'hydrogène est effectué dans une atmosphère pas ou peu oxydante, de telle façon que moins de 5% massique, de préférence moins de 1% massique du carbone fixe sur le produit sec est conjointement éliminé.

7. Procédé selon l'une des revendications précédentes, dans lequel le traitement d'élimination de l'hydrogène est un traitement thermique contrôlé du coke dans un four électrique, sous atmosphère inerte.

8. Procédé selon l'une des revendications 1 à 6, dans lequel le traitement d'élimination de l'hydrogène est un traitement thermique dans un four à flamme, notamment rotatif, entre 1000 et 1350°C.

9. Procédé selon la revendication précédente, dans lequel le traitement d'élimination de l'hydrogène est un traitement thermique dans un four à flamme entre 1250 et 1350°C.

10. Procédé selon l'une des revendications 8 ou 9, dans lequel la pression partielle en oxygène de l'atmosphère de calcination est inférieure à 5% de la pression totale des gaz.

11. Procédé selon la revendication précédente, dans lequel la pression partielle en oxygène de l'atmosphère de calcination est inférieure à 1% de la pression totale des gaz.

12. Procédé selon l'une des revendications 8 à 11, dans lequel les gaz issus de l'étape d'élimination de l'hydrogène sont utilisés au moins en partie comme carburant dudit four à flamme.

13. Procédé selon l'une des revendications précédentes, dans lequel on met en place, au dessus du mélange réactionnel disposé autour de la résistance électrique du four Acheson, des moyens supplémentaires de couverture, couplés à des moyens de collecte des produits gazeux émis par lors de la synthèse du SiC.

14. Procédé selon la revendication précédente, dans lequel on traite, notamment par brulage, les gaz collectés.

## Patentansprüche

1. Herstellungsverfahren von SiC, bei dem die Schadstoffemissionen minimiert sind, umfassend die Reduzierung von Siliziumoxid durch Kohlenstoff, durch elektrisches Erhitzen eines Widerstands im Kern eines Ausgangsstoffgemischs, das aus einer kohlenstoffhaltigen Quelle, ausgewählt aus den Koksen, insbesondere aus Petrolkoks, und einer Siliciumquelle, insbesondere einem Siliciumoxid mit einer Reinheit über 95 % SiO₂, zwecks Erzeugung einer Temperatur über 1.500 °C, bei der vereinfachten Reaktion:
SiO₂ + 3C = SiC + 2CO ( 1).
wobei das Verfahren **dadurch gekennzeichnet ist, dass** die kohlenstoffhaltige Quelle zuvor einer Entfernungsbehandlung des enthaltenen Wasserstoffs derart unterzogen wird, dass ihr elementarer Gehalt an Wasserstoff (TEMH) unter 2 Gew.-% beträgt.

2. Herstellungsverfahren von SiC nach Anspruch 1, umfassend die folgenden Schritte:
- Mischen von Ausgangsstoffen, bestehend aus:
• einem Siliciumoxid mit einer Reinheit über 95 % SiO₂,
• einer kohlenstoffhaltigen Quelle, ausgewählt aus den Koksen, deren elementarer Ausgangsgehalt an Wasserstoff (TEMH) über 2 Gew.-% beträgt, wobei die kohlenstoffhaltige Quelle vor dem Mischen mit dem Siliciumoxid einer Vorbehandlung zwecks Entfernung des enthaltenen Wasserstoffs derart unterzogen wurde, dass ihr elementarer Gehalt an Wasserstoff (TEMH) unter 2 Gew.-% beträgt,
- elektrisches Erwärmen des Ausgangsstoffgemischs mit einem im Kern desselben angeordneten Widerstand bis auf eine Temperatur über 1.500 °C zwecks Reduzierung des Siliciumoxids durch den Kohlenstoff auf eine Temperatur über 1.500 °C gemäß der vereinfachten Reaktion:
SiO₂ + 3C = SiC + 2CO (1).

3. Verfahren nach einem der Ansprüche 1 oder 2, wobei der elementare Gehalt an Restwasserstoff des Koks unter 1 Gew.-% und vorzugsweise unter 0,5Gew.-% beträgt.

4. Verfahren nach einem der vorangehenden Ansprüche, wobei der elementare Gehalt an Restwasserstoff des Koks zwischen 0,1 und 0,01 %, vorzugsweise zwischen 0,05 und 0,01 %, inklusive beträgt.

5. Verfahren nach einem der vorangehenden Ansprüche, wobei die Abmessungen des Widerstands, insbesondere sein Querschnitt und/oder seine Länge, in Abhängigkeit von der elektrischen Resistivität der dehydrogenierten kohlenstoffhaltigen Quelle konfiguriert sind.

6. Verfahren nach einem der vorangehenden Ansprüche, wobei die Behandlung zwecks Entzugs des Wasserstoffs in einer nicht oder wenig oxidativen Atmosphäre derart durchgeführt wird, dass weniger als 5 Ma%, vorzugsweise weniger als 1 Ma% des festen Kohlenstoff des trockenen Produktes zusammen entfernt werden.

7. Verfahren nach einem der vorangehenden Ansprüche, wobei die Behandlung zwecks Entzugs des Wasserstoffs eine kontrollierte thermische Behandlung des Koks in einem Elektroofen unter inerter Atmosphäre ist.

8. Verfahren nach einem der Ansprüche 1 bis 6, wobei die Behandlung zwecks Entzugs des Wasserstoffs eine thermische Behandlung in einem Ofen mit Flamme, insbesondere einem Drehofen, zwischen 1.000 und 1.350 °C ist.

9. Verfahren nach vorangehendem Anspruch, wobei die Behandlung zwecks Entzugs des Wasserstoffs eine thermische Behandlung in einem Ofen mit Flamme zwischen 1.250 und 1.350 °C ist.

10. Verfahren nach einem der Ansprüche 8 oder 9, wobei der Sauerstoffpartialdruck der Calcinationsatmosphäre unter 5 % des Gesamtgasdrucks beträgt.

11. Verfahren nach vorangehendem Anspruch, wobei der Sauerstoffpartialdruck der Calcinationsatmosphäre unter 1 % des Gesamtgasdrucks beträgt.

12. Verfahren nach einem der Ansprüche 8 bis 11, wobei die Gase aus dem Schritt zwecks Entfernung des Wasserstoffs mindestens teilweise als Brennstoff für den Flammofen verwendet werden.

13. Verfahren nach einem der vorangehenden Ansprüche, wobei über dem um den elektrischen Widerstand des Acheson-Ofens angeordneten Reaktionsgemisch zusätzliche Abdeckmittel platziert werden, die mit Sammelmitteln der gasförmigen Produkte gekoppelt sind, die bei der SiC-Synthese emittiert werden.

14. Verfahren nach vorangehendem Anspruch, wobei die gesammelten Gase insbesondere durch Verbrennen bearbeitet werden.

## Claims

1. A process for manufacturing SiC, wherein the emissions of polluting gases are minimized, comprising the reduction of silicon oxide by carbon, by electrically heating a resistor at the heart of a mixture of raw materials consisting of a carbon-based source selected from cokes, especially petroleum coke, and a source of silicon, especially a silica having a purity of greater than 95% of SiO₂, in order to give rise, at a temperature above 1500°C, to the simplified reaction:
SiO₂ + 3C = SiC + 2CO (1),
said process being **characterized in that** said carbon-based source first undergoes a treatment for removing the contained hydrogen, so that its elemental hydrogen content (EHWC) is less than 2% by weight.

2. The process for manufacturing SiC as claimed in claim 1, comprising the following steps:
- mixing of raw materials consisting or :
a) a silica having a purity of greater than 95% of SiO₂,
b) a carbon-based source selected from cokes, the elemental hydrogen content (EHWC) of which is greater than 2% by weight, said carbon-based source having undergone, before the mixing thereof with the silica, a treatment for removing the contained hydrogen, so that its elemental hydrogen content (EHWC) is less than 2% by weight,
- electric heating of said mixture of raw materials by a resistor positioned at the heart thereof, up to a temperature of greater than 1500°C, in order to give rise to the reduction of the silicon oxide by the carbon, at a temperature above 1500°C, according to the simplified reaction:
SiO₂ + 3C = SiC + 2CO (1) .

3. The process as claimed in either of claims 1 and 2, wherein the residual elemental hydrogen content of the coke is less than 1% by weight and preferably less than 0.5% by weight.

4. The process as claimed in one of the preceding claims, wherein the residual elemental hydrogen content of the coke is between 0.1% and 0.01%, preferably between 0.05% and 0.01%.

5. The process as claimed in one of the preceding claims, wherein the dimensions of the resistor, especially its cross section and/or its length, are configured as a function of the electrical resistivity of the dehydrogenated carbon-based source.

6. The process as claimed in one of the preceding claims, wherein the hydrogen removal treatment is carried out in an atmosphere that is not, or not very, oxidizing, so that less than 5% by weight, preferably less than 1% by weight of the fixed carbon on the dry product is removed at the same time.

7. The process as claimed in one of the preceding claims, wherein the hydrogen removal treatment is a controlled heat treatment of the coke in an electric furnace, under an inert atmosphere.

8. The process as claimed in one of claims 1 to 6, wherein the hydrogen removal treatment is a heat treatment in a fired furnace, especially a fired rotary furnace, between 1000°C and 1350°C.

9. The process as claimed in the preceding claim, wherein the hydrogen removal treatment is a heat treatment in a fired furnace between 1250°C and 1350°C.

10. The process as claimed in either of claims 8 and 9, wherein the oxygen partial pressure of the calcination atmosphere is less than 5% of the total pressure of the gases.

11. The process as claimed in the preceding claim, wherein the oxygen partial pressure of the calcination atmosphere is less than 1% of the total pressure of the gases.

12. The process as claimed in one of claims 8 to 11, wherein the gases resulting from the hydrogen removal step are used at least partly as fuel for said fired furnace.

13. The process as claimed in one of the preceding claims, wherein, on top of the reaction mixture positioned around the electrical resistor of the Acheson furnace, additional coverage means are put in place, coupled to means for collecting the gaseous products emitted during the synthesis of the SiC.

14. The process as claimed in the preceding claim, wherein the gases collected are treated, especially by burning off.
